(19) **Europäisches Patentamt / European Patent Office / Office européen des brevets**

(11) **EP 4 297 143 A1**

(12) **EUROPEAN PATENT APPLICATION**
published in accordance with Art. 153(4) EPC

(43) Date of publication:
**27.12.2023 Bulletin 2023/52**

(21) Application number: **21926922.2**

(22) Date of filing: **22.12.2021**

(51) International Patent Classification (IPC):
**H01M 10/0585** (2010.01)     **H01M 4/134** (2010.01)
**H01M 10/0562** (2010.01)     **H01M 4/62** (2006.01)
**H01M 10/052** (2010.01)     **H01M 4/38** (2006.01)
**H01M 4/04** (2006.01)

(52) Cooperative Patent Classification (CPC):
**H01M 4/04; H01M 4/134; H01M 4/38; H01M 4/62;
H01M 10/052; H01M 10/0562; H01M 10/0585;
Y02E 60/10; Y02P 70/50**

(86) International application number:
**PCT/KR2021/019656**

(87) International publication number:
**WO 2022/177124 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.02.2021  KR 20210020688**

(71) Applicant: **Samsung SDI Co., Ltd.**
**Yongin-si, Gyeonggi-do 17084 (KR)**

(72) Inventors:
 • **JUNG, Yun Chae**
 **Yongin-si, Gyeonggi-do 17084 (KR)**
 • **KIM, Jin Kyu**
 **Yongin-si, Gyeonggi-do 17084 (KR)**
 • **YANG, Jin Hoon**
 **Yongin-si, Gyeonggi-do 17084 (KR)**
 • **CHO, Byeong Gyu**
 **Yongin-si, Gyeonggi-do 17084 (KR)**
 • **HAN, Sang Il**
 **Yongin-si, Gyeonggi-do 17084 (KR)**

(74) Representative: **Gulde & Partner
Patent- und Rechtsanwaltskanzlei mbB
Wallstraße 58/59
10179 Berlin (DE)**

(54) **ALL-SOLID-STATE SECONDARY BATTERY, AND METHOD FOR MANUFACTURING SAME**

(57)     Provided are an all-solid secondary battery and a method of preparing the same, wherein the all-solid secondary battery includes a positive electrode layer, a negative electrode layer, and a solid electrolyte layer arranged between the positive electrode layer and the negative electrode layer, wherein a mixed layer having a thickness of 2 µm or less is included between the negative electrode layer and the solid electrolyte layer, the mixed layer includes a negative electrode layer material and a solid electrolyte layer material, a thickness ratio of the negative electrode layer to the mixed layer is 2:1 to 50:1, and a mixing volume ratio of the negative electrode layer to the solid electrolyte in the mixed layer is 2:1 to 1:1.

FIG. 1

**Description**

TECHNICAL FIELD

The present disclosure relates to an all-solid secondary battery, and a method of manufacturing the same.

BACKGROUND ART

Recently, batteries with high energy density and safety have been actively developed due to industrial demands. For example, lithium-ion batteries are being commercialized not only in the fields of information-related devices and communication devices, but also in the field of automobiles. In the field of automobiles, safety is especially important because it is related to life.

Since currently commercially available lithium-ion batteries use a liquid electrolyte including a flammable organic solvent, there is a possibility of overheating and fire when a short circuit occurs. Accordingly, an all-solid-state battery using a solid electrolyte instead of a liquid electrolyte has been proposed.

An all-solid-state battery does not use a combustible organic solvent, and thus, the likelihood of a fire or an explosion may be significantly reduced, even when a short circuit occurs. Therefore, such an all-solid-state battery may greatly increase safety as compared to a lithium-ion battery using a liquid electrolyte.

In order to improve interfacial characteristics of the negative electrode layer/electrolyte layer of the all-solid-state battery, a pressing process is performed. Through this pressing process, interfacial bonding between the negative electrode layer and the electrolyte layer becomes excellent, but the negative electrode layer material or the solid electrolyte material may be damaged when the pressing force is applied nonuniformly.

DESCRIPTION OF EMBODIMENTS

TECHNICAL PROBLEM

As aspect is to provide an all-solid secondary battery.

Another aspect is to provide a preparation method of the all-solid secondary battery.

SOLUTION TO PROBLEM

According to an aspect, provided is an all-solid secondary battery including: a positive electrode layer; a negative electrode layer; and a solid electrolyte layer arranged between the positive electrode layer and the negative electrode layer; wherein in the all-solid secondary battery, a mixed layer having a thickness of 2 $\mu$m or less is included between the negative electrode layer and the solid electrolyte layer, the mixed layer includes a negative electrode layer material and a solid electrolyte layer material, a thickness ratio of the negative electrode layer to the mixed layer is 2:1 to 50:1, and a mixing volume ratio of the negative electrode layer material to the solid electrolyte in the mixed layer is 2:1 to 1:1.

According to another aspect, provided is a method of preparing an all-solid secondary battery for preparing the above-described all-solid secondary battery including: providing a negative electrode layer including a negative current collector and a first negative active material layer; providing a positive electrode layer; preparing a laminate by providing a solid electrolyte layer between the negative electrode layer and the positive electrode layer; and pressing the laminate.

ADVANTAGEOUS EFFECTS OF DISCLOSURE

In the all-solid secondary battery according to an aspect, when a mixed layer is formed between the negative electrode layer and the solid electrolyte layer, interfacial resistance between the negative electrode layer and the solid electrolyte layer is reduced, thereby improving output characteristics and lifespan characteristics.

BRIEF DESCRIPTION OF DRAWINGS

FIG. 1 is a scanning electron microscope image of a solid electrolyte of Example 1.
FIGS. 2A and 2B show results of scanning electron microscopy-energy dispersive X-ray spectroscopy (SEM-EDS) analysis of the solid electrolyte of Example 1.
FIG. 3 schematically illustrates a structure of an all-solid secondary battery according to an embodiment.
FIG. 4 schematically illustrates a structure of an all-solid secondary battery according to another embodiment.

FIG. 5 schematically illustrates a structure of an all-solid secondary battery according to still another embodiment.

[Explanation of reference numerals]

10: positive electrode layer; 11: positive current collector;
12: positive active material layer; 20: negative electrode layer;
21: negative current collector; 22: negative active material layer;
30: solid electrolyte layer; 40: mixed layer;

MODE OF DISCLOSURE

Hereinafter, all-solid secondary batteries according to embodiments, and a preparation method thereof will be described in more detail.

Provided is an all-solid secondary battery including: a positive electrode layer; a negative electrode layer; and a solid electrolyte layer arranged between the positive electrode layer and the negative electrode layer, wherein in the all-solid secondary battery, a mixed layer having a thickness of 2 $\mu$m or less is included between the negative electrode layer and the solid electrolyte layer, the mixed layer includes a negative electrode layer material and a solid electrolyte layer material, a thickness ratio of the negative electrode layer to the mixed layer is 2:1 to 50:1, and a mixing volume ratio of the negative electrode layer material to the solid electrolyte in the mixed layer is 2:1 to 1:1.

In order to improve interfacial characteristics of the negative electrode layer and the solid electrolyte layer in the all-solid-state battery, a pressing process is performed. Through this pressing process, interfacial bonding between the negative electrode layer and the electrolyte layer becomes excellent, but the negative electrode layer material or the solid electrolyte material may be broken or damaged, due to nonuniform application of pressure during the pressing process.

The present disclosure solved the above-described issue by forming a mixed layer between the negative electrode layer and the solid electrolyte layer, and thereby increasing a contact area between the negative electrode layer and the solid electrolyte layer, and decreasing interfacial resistance between the negative electrode layer and the solid electrolyte layer, and thus, an all-solid secondary battery with improved output characteristics may be prepared.

The mixed layer has a thickness of 2 $\mu$m or less, and includes a negative electrode layer material and a solid electrolyte layer material.

According to an embodiment, a thickness ratio of the negative electrode layer to the mixed layer may be 2:1 to 50:1, 3:1 to 40:1, 3.5:1 to 35:1, 4:1 to 30:1, 5:1 to 20: 1, 5:1 to 15:1, or 5:1 to 10:1. Thicknesses of the negative electrode layer and the mixed layer respectively refer to thicknesses of a pressed negative electrode layer and a pressed mixed layer, after performing a pressing process in preparing an all-solid secondary battery, and are measured by using an SEM analysis or the like. When the thickness of the mixed layer with respect to the negative electrode layer is lesser than the above range, the effect of improving interfacial characteristics of the negative electrode layer and the solid electrolyte layer is insignificant, and when the thickness of the mixed layer is greater than the above range, an amount of a negative electrode layer material consumed in the mixed layer is relatively increased, and thus, characteristics of the negative electrode may be partially deteriorated.

The thickness of the mixed layer may be about 0.1 $\mu$m to about 2 $\mu$m, about 0.15 $\mu$m to about 1.9 $\mu$m, about 0.2 $\mu$m to about 1.8 $\mu$m, about 0.3 $\mu$m to about 1.7 $\mu$m, about 0.4 $\mu$m to about 1.6 $\mu$m, or about 0.5 $\mu$m to about 1.5 $\mu$m. The thickness of the mixed layer refers to the thickness of the mixed layer after performing a pressing process in preparing an all-solid secondary battery, and is measured by an SEM analysis, or the like. When the thickness of the mixed layer exceeds 2 $\mu$m, an amount of the negative electrode consumed in the mixed layer increases, and the characteristics of the negative electrode may deteriorate.

The thickness of the negative electrode layer may be about 1 $\mu$m to about 100 $\mu$m.

In the mixed layer, the mixing volume ratio of the negative electrode layer material to the solid electrolyte layer material may be about 2:1 to about 1:2, about 1.7:1 to about 1:1.7, about 1.8:1 to about 1:1.8, about 1.6:1 to about 1:1.6, about 1.5:1 to about 1:1.5, about 1.4:1 to about 1:1.4, about 1.3:1 to about 1:1.3, or about 1.2:1 to about 1:1.2. When the mixing volume ratio of the negative electrode layer material to the solid electrolyte material is within the above range in the mixed layer, interfacial characteristics between the negative electrode layer and the solid electrolyte layer are improved.

"Negative electrode layer material", used herein, refers to a solid material in a negative electrode layer, and contains for example, a negative active material and a binder, and "solid electrolyte layer material" refers to a solid material in a solid electrolyte layer, and contains for example, a solid electrolyte and a binder. In addition, the mixing volume ratio of the negative electrode layer material to the solid electrolyte material is calculated by measuring volumes respectively occupied by the negative electrode layer material and the solid electrolyte layer in the mixed layer existing between the negative electrode layer and the solid electrolyte layer through an SEM-EDS analysis.

Through the SEM analysis of the mixed layer, it may be seen that the mixed layer has a non-uniform interface on the surface due to irregularities formed on the surface. When such a mixed layer is arranged between the negative electrode layer and the solid electrolyte layer, a contact area between the negative electrode layer and the solid electrolyte layer increases, resulting in excellent binding force therebetween. Therefore, issues of partial damage and breakage of the negative electrode layer and the solid electrolyte layer occurring during a pressing process in preparing an all-solid secondary battery in the art are prevented in advance, and interfacial characteristics are improved.

In an all-solid secondary battery according to an embodiment, the negative electrode layer includes a negative current collector and a first negative active material layer, and the negative current collector, the negative active material layer, and a region therebetween are Li-free regions in which lithium (Li) is not included in an initial state or a post-discharge state of the all-solid secondary battery.

An all-solid secondary battery according to an embodiment may include a lithium precipitation layer between the negative current collector and the negative active material during or after charging.

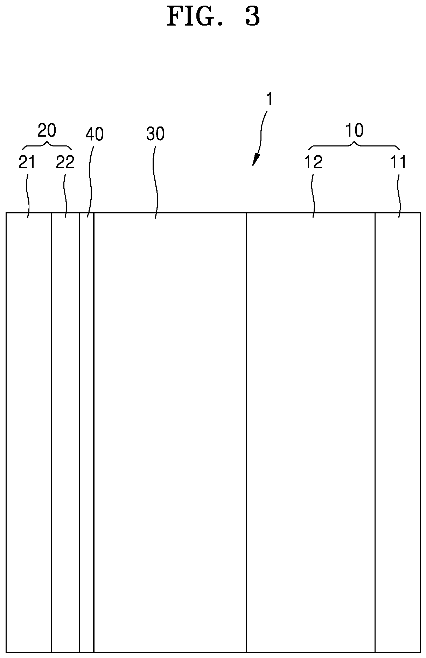

Referring to FIG. 3, the all-solid secondary battery 1 includes a positive electrode layer 10; a negative electrode layer 20; and a solid electrolyte layer 13 arranged between the positive electrode layer 10 and the negative electrode layer 20. A mixed layer 40 may be disposed between the negative electrode layer 20 and the solid electrolyte layer 13.

The negative electrode layer 20 includes a negative current collector and a first negative active material layer, and a thickness of the first negative active material layer may be about 1 $\mu$m to about 20 $\mu$m, for example, about 1 $\mu$m to about 10 $\mu$m, for example, about 2 $\mu$m to about 8 $\mu$m, for example, about 4 $\mu$m to about 6 $\mu$m.

A metal or metalloid thin film may be further included between the negative current collector and the first negative active material layer. The metal or metalloid thin film includes gold (Au), silver (Ag), magnesium (Mg), zinc (Zn), silicon (Si), tin (Sn), platinum (Pt), palladium (Pd), aluminum (Al ), bismuth (Bi), or combinations thereof, and a thickness of the metal or metalloid thin film may be about 1 nm to about 800 nm, for example, about 10 nm to about 30 nm.

The first negative active material layer may have a porous structure. Porosity of the first negative active material layer may be 30 % or less, for example, 5 % to 25 %. When the porosity of the first negative active material layer is within the above range, dendrites may be effectively inhibited from growing to the positive active material layer, thereby suppressing a short circuit due to the dendrites, and an all-solid secondary battery having excellent high voltage, high capacity, and lifespan characteristics may be manufactured.

At an interface between the solid electrolyte layer and the negative current collector, metallic lithium may be precipitated when a precipitation point of metallic lithium is reached. When lithium is precipitated, dendrites grow toward the positive active material layer through pores of the solid electrolyte layer, and a short circuit of the all-solid secondary battery may occur.

However, when the porosity of the first negative active material layer is within the above range, dendrites may be effectively inhibited from growing to the positive active material layer, thereby suppressing a short circuit due to the dendrites, and an all-solid secondary battery having excellent high voltage, high capacity, and lifespan characteristics may be manufactured.

In the present specification, porosity may be confirmed by using a mercury intrusion porosimetry or a scanning electron microscope (SEM). A measurement method by using a mercury porosimeter is by measuring injected mercury while injecting mercury to a sample, to calculate the pore size and pore size distribution.

A negative electrode layer according to an embodiment may further include a second negative active material layer. The second negative active material layer may be arranged on at least one of an upper portion of the first negative active material layer, and between the negative current collector and the first negative active material layer. The second negative active material layer may include a metal or metalloid element or a combination thereof capable of forming an alloy with lithium. The second negative active material layer may be, for example, a metal layer including lithium or a lithium alloy. According to an embodiment, a surface of the second negative active material layer may include lithium fluoride (LiF).

The second negative active material layer may be a Li-free region in which lithium (Li) is not included in an initial state or a post-discharge state of the all-solid secondary battery. Before charging, the negative electrode layer may have a structure including a negative current collector, a metal or metalloid film, and a first negative active material layer. After the negative electrode layer as such is charged, a second negative active material layer may be formed on the first negative active material layer. The second negative active material layer may be non-porous.

A carbon layer may be further included between the first negative active material layer and the solid electrolyte layer. The carbon layer is formed by using, for example, carbon black, carbon fiber, graphite, carbon nanotube, graphene, or a combination thereof. When the carbon layer is formed in this way, resistance between the first negative active material layer and the solid electrolyte layer may be lowered, and lithium dendrites may be suppressed. Accordingly, lifespan characteristics of an all-solid secondary battery having a negative electrode layer, in which the carbon layer is further formed, may be further improved compared to an all-solid secondary battery having a negative electrode layer without the carbon layer formed therein.

Hereinafter, a method of preparing an all-solid secondary battery according to an embodiment will be described.

First, a negative electrode layer including a negative current collector and a first negative active material layer is provided.

Separately, a positive electrode layer is provided.

A solid electrolyte layer is provided between the negative electrode layer and the positive electrode layer to prepare a laminate, and the laminate is pressed.

The solid electrolyte layer is prepared by drying a composition containing a solid electrolyte, a binder, and a solvent at about 25 °C to about 80 °C. Viscosity of the composition is controlled to about 200 cP to 10,000 cP. When a solid electrolyte layer is formed by using a composition having such a viscosity, a solid electrolyte layer having excellent interfacial bonding with the negative electrode layer may be prepared.

According to an embodiment, drying may be performed in a convection oven controlled to have a temperature of about 25 °C to about 75 °C.

According to another embodiment, drying may be performed in multiple steps, for example, in two steps. For drying, a first drying is performed at about 25 °C to about 70 °C, and then a second drying is performed at about 30 °C to about 75 °C. When the first drying is performed at a higher temperature than the second drying, interfacial characteristics between the negative electrode layer and the solid electrolyte layer are improved.

Duration of the drying may be about 30 minutes to about 24 hours, about 1 hour to about 20 hours, or about 2 hours to about 15 hours.

Pressing the laminate is performed by using a roll press, a flat press, a hot press, a warm isostatic press (WIP), and the like, and for example, a hydrostatic press may be used.

The pressing may be carried out at a temperature of room temperature (20 °C to 25 °C) to about 90 °C. Alternatively, the pressing may be performed at a high temperature of 100 °C or more. Time for which pressure is applied may be, for example, about 30 minutes or less, about 20 minutes or less, about 15 minutes or less, or about 10 minutes or less. The time for which pressure is applied may be, for example, about 1 ms to about 30 minutes, about 1 ms to about 20 minutes, about 1 ms to about 15 minutes, or about 1 ms to about 10 minutes. The pressing method may be, for example, isotactic pressing, roll pressing, flat pressing, etc., but is not necessarily limited to these methods, and any pressing used in the art is may be used. By this pressing, for example, a solid electrolyte powder is sintered to form one solid electrolyte layer.

The pressing time may vary depending on temperature and pressure and may be, for example, less than 30 minutes, or less than 20 minutes.

After the pressing, a thickness of the positive active material layer may be about 100 $\mu$m to about 150 $\mu$m, a thickness of the negative active material layer may be about 10 $\mu$m to about 15 $\mu$m, and a thickness of the solid electrolyte layer may be about 100 $\mu$m to about 150 $\mu$m.

According to an embodiment, the pressing is performed by using WIP, and the pressure may be about 200 MPa to about 600 MPa, about 300 MPa to about 550 MPa, about 350 MPa to about 520 MPa, about 380 MPa to about 500 MPa, or about 400 MPa to about 500 MPa.

The pressing is carried out at a temperature of about 60 °C to about 90 °C, about 65 °C to about 88 °C, about 70 °C to about 85 °C, or about 75 °C to about 85 °C. And the pressing time varies depending on the temperature and pressure at the time of pressing, and may be about 10 minutes to about 6 hours, about 15 minutes to about 5 hours, about 20 minutes to about 3 hours, about 20 minutes to about 2 hours, or about 30 minutes to about 1 hour.

The above-described preparation method of an all-solid secondary battery allows mass-production, and may easily form a close interface between the electrode layers and the solid electrolyte layer when pressure is applied after lamination. In addition, the preparation method of an all-solid secondary battery may reduce interfacial resistance between the positive electrode layer and the solid electrolyte layer, and at the same time improve battery performance such as rate characteristics and lifespan characteristics.

In an all-solid secondary battery, a negative electrode layer is prepared by coating and drying a composition including a first negative active material, a binder, and a solvent.

As the binder, an aqueous binder, an organic binder, or a combination thereof may be used. Binders may include, for example, polyvinyl alcohol, carboxymethylcellulose, hydroxypropylcellulose, diacetylcellulose, polyvinylchloride, carboxylated polyvinylchloride, polyvinylfluoride, polymers including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or combinations thereof.

As the aqueous binder, styrene butadiene rubber (SBR), carboxymethylcellulose (CMC), or a combination thereof may be used. When using the aqueous binder, water is used as a solvent.

As the organic binder, polytetrafluoroethylene, polyvinylidene fluoride, or the like can be used, and when such an organic binder is used, N-methylpyrrolidone (NMP) or the like may be used as a solvent.

Hereinafter, an all-solid secondary battery according to exemplary embodiments will be described in more detail.

[All-solid secondary battery]

Referring to FIG. 3, an all-solid secondary battery 1 includes a positive electrode layer 10; a negative electrode layer 20; and a solid electrolyte layer 30 arranged between the positive electrode layer 10 and the negative electrode layer 20, and a mixed layer 40 according to an embodiment is formed between the negative electrode layer 20 and the solid electrolyte layer 30, to have a thickness of 2 $\mu$m or less. Here, a thickness ratio of the negative electrode layer 20 to the mixed layer 40 may be 2:1 to 50:1. The positive electrode 10 includes a positive current collector 11 and a positive active material layer 12 arranged on the positive current collector 11, and the negative electrode layer 20 includes a negative current collector 21 and a first negative active material layer 22 according to an embodiment arranged on the negative current collector.

[Positive electrode layer: Positive current collector]

For the positive current collector 11, a plate or foil made of indium (In), copper (Cu), magnesium (Mg), stainless steel, titanium (Ti), iron (Fe), cobalt (CO), nickel (Ni), zinc (Zn), aluminum (Al), germanium (Ge), lithium (Li), or an alloy thereof, may be used. The positive electrode collector 11 may be omitted.

[Positive electrode layer: Positive active material]

The positive active material layer 12 includes, for example, a positive active material and a solid electrolyte. The solid electrolyte included in the positive electrode layer 10 is similar to or different from the solid electrolyte included in the solid electrolyte layer 30. For a more detailed description of the solid electrolyte, refer to a section for the solid electrolyte layer 30.

The positive active material is a positive active material that may reversibly absorb or desorb lithium ions. The positive active material may be for example, a lithium transition metal oxide, such as lithium cobalt oxide (LCO), lithium nickel oxide, lithium nickel cobalt oxide, lithium nickel cobalt aluminum hydroxide (NCA), lithium nickel cobalt manganate (NCM), lithium manganate, or lithium iron phosphate, nickel sulfide, copper sulfide, lithium sulfide, iron oxide, vanadium oxide, or the like, but is not limited thereto, and any positive active material used in the art may be used. The positive active material may be composed of one positive active material or a mixture of two or more positive active materials.

The lithium transition metal oxide is, for example, a compound represented by any one of chemical formulas of $Li_aA_{1-b}B_bD_2$ (wherein $0.90 \leq a \leq 1$, and $0 \leq b \leq 0.5$); $Li_aE_{1-b}B_bO_{2-c}D_c$ (wherein $0.90 \leq a \leq 1$, $0 \leq b \leq 0.5$, and $0 \leq c \leq 0.05$); $LiE_{2-b}B_bO_{4-c}D_c$ (wherein $0 \leq b \leq 0.5$, and $0 \leq c \leq 0.05$); $Li_aNi_{1-b-c}Co_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_2$ (wherein $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_2$ (wherein $0.90 \leq a \leq 1$, $0 \leq b \leq 0.5$, $0 \leq c \leq 0.05$, and $0 < \alpha \leq 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$, and $0.001 \leq b \leq 0.1$); $Li_aCoG_bO_2$ (wherein $0.90 \leq a \leq 1$, and $0.001 \leq b \leq 0.1$); $Li_aMnG_bO_2$ (wherein $0.90 \leq a \leq 1$, and $0.001 \leq b \leq 0.1$); $Li_aMn_2G_bO_4$ (wherein $0.90 \leq a \leq 1$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); $LiFePO_4$. In such a compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound to which a coating layer is added on a surface may be used, and a mixture of the above-described compound and the compound to which a coating layer is added may also be used. The coating layer added on the surface of this compound may include, for example, coating element compounds such as an oxide of the coating element, a hydroxide of the coating element, an oxyhydroxide of the coating element, an oxycarbonate of the coating element, or a hydroxycarbonate of the coating element. The compound that forms such a coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming a coating layer may be selected within the range that the method does not adversely affect the physical properties of the positive active material. The coating method may be, for example, a spray coating method, an immersion method, etc. Specific coating methods may be well understood by those skilled in the art, and a detailed description is omitted.

The positive active material includes, for example, a lithium salt of a transition metal oxide which has a layered rock salt type structure among the above-described lithium transition metal oxides. "Layered rock salt type structure" is for example, a structure where oxygen atom layers and metal atom layers are alternately arranged in the direction of <111> of a cubic rock salt type structure, and thereby, each atom layer forms a two-dimensional plane. "Cubic rock salt type structure" is a structure of a sodium chloride (NaCl) type, which is a kind of a crystal structure, and specifically, face centered cubic (fcc) lattices each formed by positive ions and negative ions are displaced from each other by 1/2 of a ridge of the unit lattice. A lithium transition metal oxide having such a layered rock salt type structure may be, for example, a three-element lithium transition metal oxide such as $LiNi_xCo_yAl_zO_2$ (NCA), or $LiNi_xCo_yMn_zO_2$ (NCM) ($0 < x < 1$, $0 < y < 1$, $0 < z < 1$, and $x + y + z = 1$), and the like. When a positive active material includes a three-element lithium transition metal oxide having a layered rock type structure, energy density and thermal stability of the all-solid secondary battery 1 are further improved.

The positive active material may be covered by a coating layer as described above. The coating layer may be any commonly known as a coating layer for a positive active material of an all-solid secondary battery. The coating layer may be, for example, $Li_2O$-$ZrO_2$ (LZO).

When the positive active material is, for example, a three-element lithium transition metal oxide such as NCA or NCM and contains nickel (Ni), by increasing capacity density of the all-solid secondary battery 1, it is possible to decrease metal elution of the positive active material in a charging state. As a result, cycle characteristics of an all-solid secondary battery 1 in a charging state are improved.

A shape of the positive active material may be, for example, a particle shape such as a true sphere, an elliptical sphere, and the like. A particle diameter of the positive active material is not particularly limited and is in a range applicable to a positive active material of an all-solid secondary battery in the art. An amount of the positive active material in the positive electrode 10 is not particularly limited either, and may be in a range applicable to a positive electrode of an all-solid secondary battery in the art.

[Positive electrode layer: Solid electrolyte]

The positive active material layer 12 may include, for example, a solid electrolyte. The solid electrolyte included in the positive electrode layer 10 may be the same with or different from a solid electrolyte included in a solid electrolyte layer 30. For a more detailed description of the solid electrolyte, refer to a section for the solid electrolyte layer 30.

The solid electrolyte included in the positive active material layer 12 may have a smaller average particle diameter (D50) compared to the solid electrolyte included in the solid electrolyte layer 30. For example, the average particle diameter (D50) of the solid electrolyte included in the positive active material layer 12 may be, compared to the average particle diameter (D50) of the solid electrolyte included in the solid electrolyte layer 30, 90 % or less, 80 % or less, 70 % or less, 60 % or less, 50 % or less, 40 % or less, 30 % or less, or 20 % or less.

[Positive electrode layer: Binder]

The positive active material layer 12 may include a binder. The binder may be, for example, styrene butadiene rubber (SBR), polytetrafluoroethylene, polyvinylidene fluoride, polyethylene, or the like.

[Positive electrode layer: Conductive material]

The positive active material layer 12 may include a conductive material. The conductive material may be, for example, graphite, carbon black, acetylene black, ketjen black, carbon fiber, and metal powder.

[Positive electrode layer: Other additives]

The positive electrode layer 10 may further include an additive such as a filler, a coating agent, a dispersant, an ion conductivity supplement, and the like, besides the above-described positive active material, the solid electrolyte, the binder, and the conductive material.

As the filler, coating agent, a dispersant, an ion conductivity supplement, or the like that may be included in the positive electrode layer 10, any commonly known material used in an electrode of an all-solid secondary battery may be used.

[Solid electrolyte layer]

The solid electrolyte may be a sulfide-based solid electrolyte.

[Solid electrolyte layer: Sulfide-based solid electrolyte]

Referring to FIGS. 3 to 5, the solid electrolyte layer 30 includes a sulfide-based solid electrolyte arranged between the positive electrode layer 10 and the negative electrode layer 20.

The sulfide-based solid electrolyte, for example, may be at least one selected from, $Li_2S-P_2S_5$, $Li_2S-P_2S_5-LiX$ (in which X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, (in which m and n are positive numbers, and Z is one selected from Ge, Zn, and Ga), $Li_2S-GeS_2$, $Li_2S-SiS_2-Li_3PO_4$, $Li_2S-SiS_2-Li_pMO_q$ (in which p and q are positive numbers, and M is one selected from P, Si, Ge, B, Al, Ga, and In), $Li_{7-x}PS_{6-x}Cl_x(0\leq x\leq2)$, $Li_{7-x}PS_{6-x}Br_x$, $(0\leq x\leq2)$, and $Li_{7-x}PS_{6-x}I_x(0\leq x\leq2)$. A sulfide-based solid electrolyte may be prepared by, for example, treating a raw material such as $Li_2S$ or $P_2S_5$ by melt quenching or mechanical milling method. In addition, after this treatment, heat treatment may be performed. The solid electrolyte may be in an amorphous state, a crystalline state, or a mixed state thereof. In addition, the solid electrolyte may include, for example, at least one of sulfur (S), phosphorus (P) and lithium (Li) among the above-described sulfide-based solid electrolyte materials as constituent elements. For example, the solid electrolyte may be a material including $Li_2S-P_2S_5$. When a compound that includes $Li_2S-P_2S_5$ is use as a sulfide-based solid electrolyte material that forms the solid electrolyte, a mixing molar ratio of $Li_2S$ to $P_2S_5$ may be, for example, in a range of $Li_2S$: $P_2S_5$ = 50:50 to 90:10.

The sulfide-based solid electrolyte may be, for example, an argyrodite-type compound including at least one selected from $Li_{7-x}PS_{6-x}Cl_x$, $(0\leq x\leq2)$, $Li_{7-x}PS_{6-x}Br_x$, $(0\leq x\leq2)$, and $Li_{7-x}PS_{6-x}I_x$, $(0\leq x\leq2)$. In particular, the sulfide-based solid electrolyte may be an argyrodite-type compound including at least one selected from $Li_6PS_5Cl$, $Li_6PS_5Br$, and $Li_6PS_5I$.

The argyrodite-type solid electrolyte may have a density of about 1.5 g/cc to about 2.0 g/cc. When the argyrodite-type solid electrolyte has a density of 1.5 g/cc or more, the internal resistance of the all-solid secondary battery is reduced, and penetration of the solid electrolyte by Li may be effectively suppressed.

An elastic coefficient of the solid electrolyte may be, for example, about 15 GPa to about 35 GPa.

[Solid electrolyte layer: Binder]

The solid electrolyte layer may include, for example, a binder. The binder included in the solid electrolyte layer 30 may be, for example, styrene butadiene rubber (SBR), polytetrafluoroethylene, polyvinylidene fluoride, polyethylene, etc., but is not limited thereto,, and any used as a binder in the art may be used. The binder in the solid electrolyte layer 30 may be the same with or different from the binders included in the positive active material layer 12 and the negative active material layer 22.

[Negative electrode layer]

[Negative electrode layer structure]

A thickness of the first negative active material layer 22 may be, for example, 50 % or less, 40 % or less, 30 % or less, 20 % or less, 10 % or less, or 5 % or less of a thickness of the positive active material layer. The thickness of the first negative active material layer may be, for example, about 1 $\mu$m to about 20 $\mu$m, about 2 $\mu$m to about 10 $\mu$m, or about 3 $\mu$m to about 7 $\mu$m. When the thickness of the first negative active material layer is excessively decreased, lithium dendrites formed between the first negative active material layer 22 and the negative current collector 21 collapse the first negative active material layer, and it may be difficult to improve cycle characteristics of the all-solid secondary battery 1. When the thickness of the negative active material layer is excessively increased, energy density of the all-solid secondary battery 1 is lowered, and internal resistance of the all-solid secondary battery 1 is increased by the first negative active material layer, and it may be difficult to be improve cycle characteristics of the all-solid secondary battery 1.

When the thickness of the first negative active material layer is reduced, for example, charge capacity of the first negative active material layer is also reduced. The charge capacity of the first negative active material layer 22 may be, for example, 50 % or less, 40 % or less, 30 % or less, 20 % or less, 10 % or less, 5 % or less, or 2 % or less, compared to charge capacity of the positive active material layer 12. The charge capacity of the first negative active material layer 22 may be, for example, about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 %, of the charge capacity of the positive active material layer 12. When the charge capacity of the first negative active material layer 22 is excessively small, the first negative active material layer 22 becomes very thin, and lithium dendrites, which are formed between the first negative active material layer 22 and the negative current collector 21 in repeated charge/discharge processes, collapse the first negative active material layer 22, and it is difficult to improve cycle characteristics of the all-solid secondary battery 1. When the charge capacity of the first negative active material layer 22 is excessively increased, energy density of the all-solid secondary battery 1 is lowered, and internal resistance of the all-solid secondary battery 1 is increased by the first negative active material layer 22, and it is difficult to improve cycle characteristics of the all-solid secondary battery 1.

The charge capacity of the positive active material layer 12 is obtained by multiplying a charge capacity density (mAh/g) of the positive active material to a mass of the positive active material of the positive active material layer 12. When different kinds of positive active materials are used, a value of charge capacity density × mass is calculated for each positive active material, and a total sum of the values is the charge capacity of the positive active material layer 12. Charge capacity of the first negative active material layer 22 is calculated in the same way. That is, the charge capacity of the first negative active material layer 22 is obtained by multiplying a charge capacity density (mAh/g) of the negative active material to a mass of the negative active material in the first negative active material layer 22. When different kinds of negative active materials are used, a value of charge capacity density × mass is calculated for each negative active material, and a total sum of the values is the capacity of the first negative active material layer 22. Here, the charge capacity density of the positive active material and the negative active material is estimated by using an all-solid half-cell that uses lithium metal as a relative electrode. The charge capacities of the positive active material layer 12 and the first negative active material layer 22 are directly measured by charge capacity measurement by using the all-solid half-cell. A charge capacity density is obtained by dividing the measured charge capacity by the mass of each active material. Alternatively, the charge capacities of the positive active material layer 12 and the first negative active material layer 22 may be initial charge capacities measured at the charging of the first cycle of charge/discharge processes.

[Negative electrode layer: Negative current collector]

A negative current collector 21 is composed of, for example, a material that does not react with lithium, that is, that does not form an alloy or a compound with lithium. The material constituting the negative current collector 21 is, for example, copper (Cu), stainless steel, titanium (Ti), iron (Fe), cobalt (Co), nickel (Ni), and the like, but is not limited thereto, and all used as a electrode current collector in the art may be used. A thickness of the negative current collector may be about 1 $\mu$m to about 20 $\mu$m, for example, about 5 $\mu$m to about 15 $\mu$m, or for example, about 7 $\mu$m to about 10 $\mu$m.

The negative current collector 21 may consist of one the above-described metals, an alloy of two or more metals, or a coating material. The negative current collector 21 is , for example, in a plate-like or foil shape.

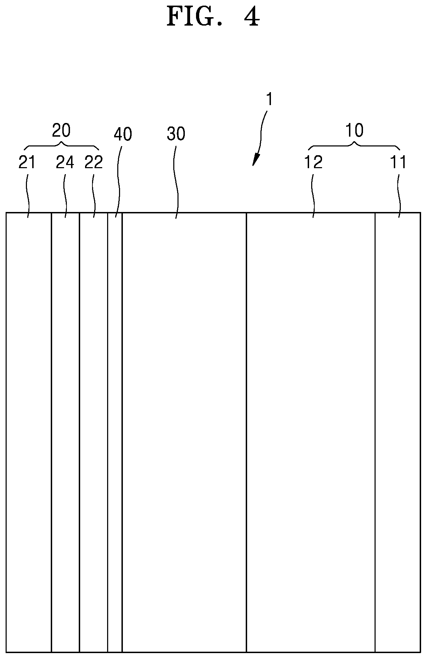

Referring to FIG. 4, the all-solid secondary battery 1 further includes, for example, a thin film 24 including an element capable of forming an alloy with lithium, on the negative current collector 21. The thin film 24 is arranged between the negative current collector 21 and the first negative active material layer 22. A mixed layer 40 according to an embodiment is arranged between the first negative active material layer 22 and the solid electrolyte layer 30.

The thin film 24 includes, for example, an element capable of forming an alloy with lithium. The element capable of forming an alloy with lithium includes, for example, gold, silver, zinc, tin, indium, silicon, aluminum, bismuth, and the like, but is not limited thereto, and all elements capable of forming an alloy with lithium may be used. The thin film 24 may be composed of one of these metals, or may be composed of an alloy of various kinds of metals. As the thin film 24 is arranged on the negative current collector 21, for example, a precipitation shape of a second negative active material layer (not drawn) precipitated between the thin film 24 and the first negative active material layer 22 becomes more flattened, and cycle characteristic of the solid secondary battery 1 may be further improved.

A thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, it may be difficult for the thin film 24 to function. When the thickness of the thin film is too increased, the thin film itself occludes lithium and an amount of precipitated lithium at the negative electrode layer is decreased, thereby reducing energy density of the all-solid-state battery, and cycle characteristic of the all-solid secondary battery 1 may be declined. The thin film 24 may be arranged on the negative current collector 21 by, for example, a vacuum deposition method, a sputtering method, a plating method, and the like, but the method is not limited thereto, and all methods used to form a thin film in the art may be used.

[Negative electrode layer: Negative active material]

The negative electrode layer 20 includes a negative current collector 21 and a negative active material layer 22 arranged on the negative current collector. The negative active material layer 22 may include, for example, a negative active material, and a binder.

The negative active material included in the negative active material layer 22 has, for example, a particle form. An average particle diameter of the negative active material having a particle form may be, for example, 4 $\mu$m or less, 2 $\mu$m or less, 1 $\mu$m or less, or 900 nm or less. The average particle diameter of the particle-shaped negative active material may be, for example, about 10 nm to about 4 $\mu$m, about 10 nm to about 2 $\mu$m, or about 10 nm to about 900 nm. When the negative active material has an average particle diameter in this range, reversible absorption and/or desorption of lithium at a time of charging/discharging may be easier. The average particle diameter of the negative active material is, for example, a median diameter (D50) measured by using a laser particle size distribution device.

The negative active material may include, for example, at least one selected from carbon-based negative active materials, and metal or metalloid negative active materials.

The carbon-based negative active material may be, particularly, amorphous carbon. The amorphous carbon may be, for example, carbon black (CB), acetylene black (AB), furnace black (FB), ketjen black (KB), graphene, and the like, but is not limited thereto, and all classified as amorphous carbon in the art may be used. Amorphous carbon has a very low or no crystallinity and is distinguished from crystalline carbon or graphite carbon.

The metal or metalloid negative active material includes at least one selected from the group consisting of, gold (Au), platinum (Pt), palladium (Pd), silicon (Si), silver (Ag), aluminum (Al), bismuth (Bi), tin (Sn), and zinc (Zn), but is not limited thereto, and any used as a metal negative active material or metalloid negative active material forming an alloy or compound with lithium in the art may be used. For example, nickel (Ni) may not be a negative active material because nickel does not form an alloy with lithium.

The negative active material layer 22 includes a kind of a negative active material, or a mixture of a plurality of different negative active materials. For example, the negative active material layer 22 may include amorphous carbon only or, at least one selected from the group consisting of, gold (Au), platinum (Pt), palladium (Pd), silicon (Si), silver (Ag), aluminum (Al), bismuth (Bi), tin (Sn), and zinc (Zn). Alternatively, the first negative active material layer 22 includes a mixture of amorphous carbon and at least one selected from the group consisting of, gold (Au), platinum (Pt), palladium (Pd), silicon (Si), silver (Ag), aluminum (Al), bismuth (Bi), tin (Sn), and zinc (Zn). A mixing ratio of the mixture of amorphous carbon to gold or the like may be, for example, 10:1 to 1:2, 5:1 to 1:1, or 4:1 to 2:1 by weight, but is not limited thereto, and may be selected according to characteristics of the all-solid secondary battery 1. As the negative active material has such a composition, cycle characteristics of the all-solid secondary battery 1 may be further improved.

The negative active material included in the negative active material layer 22 includes, for example, a mixture of first particles made of amorphous carbon and second particles made of a metal or a metalloid. The metal or metalloid, for example, includes gold (Au), platinum (Pt), palladium (Pd), silicon (Si), silver (Ag), aluminum (Al), bismuth (Bi), tin (Sn), and zinc (Zn). The metalloid is, alternatively, a semiconductor. An amount of the second particle is, with respect to the total weight of the mixture, about 8 wt% to about 60 wt%, about 10 wt% to about 50 wt%, about 15 wt% to about 40 wt%, or about 20 wt% to about 30 wt%. As the amount of the second particle is in the range, for example, cycle characteristics the all-solid secondary battery 1 may be further improved.

[Negative electrode layer: Binder]

A binder included in the negative active material layer 22 may be, for example, styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, etc., but is not necessarily limited thereto, and any used as a binder in the art may be used. The binder may be composed of one binder or multiple different binders.

As the negative active material layer 22 includes a binder, the negative active material layer 22 may be stabilized on the negative current collector 21. In addition, in the charge/discharge processes, despite a volume change and/or a change of relative positions of the negative active material layer 22, cracking of the negative active material layer 22 may be suppressed. For example, when the negative active material layer 22 does not include a binder, it is possible to easily separate the negative active material layer 22 from the negative current collector 21. When the negative active material layer 22 is separated from the negative current collector 22, in the region where the negative current collector 21 is exposed, the negative current collector 21 may contact the second solid electrolyte layer 23, and likelihood of a short circuit increases. The negative active material layer 22 is prepared by, for example, applying slurry in which a material that make up the negative active material layer 22 is dispersed, on the negative current collector 21, and by drying the same. By including a binder in the negative active material layer 22, the negative active material in the slurry may be dispersed stably. For instance, when the slurry is applied on the negative current collector 21 by a screen printing method, it is possible to suppress clogging of the screen (for example, clogging by agglomerates of the negative active material).

[Negative electrode layer: Other additives]

The negative active material layer 22 may further include an additive used for an all-solid secondary battery in the art, such as a filler, a coating agent, a dispersant, an ion conductivity supplement, and the like.

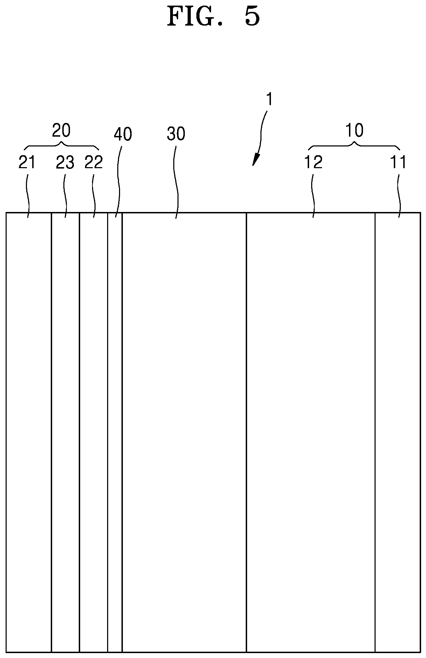

The negative active material layer 22 may be a first negative active material layer 22a as shown in FIG. 4, or a third negative active material layer 22b as shown in FIG. 5.

[Negative electrode layer: First negative active material layer]

A thickness of the first negative active material layer 22a may be, for example, 50 % or less, 40 % or less, 30 % or less, 20 % or less, 10 % or less, or 5 % or less of a thickness of the positive active material layer 12. The thickness of the first negative active material layer 22a may be, for example, about 1 $\mu$m to about 20 $\mu$m, about 2 $\mu$m to about 10 $\mu$m, or about 3 $\mu$m to about 7 $\mu$m. When the thickness of the first negative active material layer 22a is within the above range, cycle characteristics of the all-solid secondary battery 1 are excellent, and charge capacity of the first negative active material layer 22a is excellent. The charge capacity of the first negative active material layer 22a may be, for example, 50 % or less, 40 % or less, 30 % or less, 20 % or less, 10 % or less, 5 % or less, or 2 % or less, compared to charge capacity of the positive active material layer 12. The charge capacity of the first negative active material layer 22a may be, for example, about 0.1 % to about 50 %, about 0.1 % to about 30 %, about 0.1 % to about 10 %, about 0.1 % to about 5 %, or about 0.1 % to about 2 % of the charge capacity of the positive active material layer 12. When the charge capacity of the first negative active material layer 22a is within the above range, during charge/discharge processes repeated by controlling the thickness of the first negative active material layer 22a, cycle characteristics and an energy density of the all-solid secondary battery 1 are excellent.

The charge capacity of the positive active material layer 12 is obtained by multiplying a charge capacity density (mAh/g) of the positive active material to a mass of the positive active material in the positive active material layer 12. When different kinds of positive active materials are used, a value of charge capacity density $\times$ mass is calculated for each positive active material, and a total sum of the values is the charge capacity of the positive active material layer 12. The charge capacity of the first negative active material layer 22a is calculated in the same way. That is, the charge capacity of the first negative active material layer 22a is obtained by multiplying a charge capacity density (mAh/g) of the negative active material to a mass of the negative active material in the first negative active material layer 22a. When different kinds of negative active materials are used, a value of charge capacity density $\times$ mass is calculated for each negative active material, and a total sum of the value is the capacity of the first negative active material layer 22a. Here, the charge capacity densities of the positive active material and the negative active material are estimated by using an all-solid half-cell that uses lithium metal as a relative electrode. The charge capacities of the positive active material layer 12 and the first negative active material layer 22a are directly measured by charge capacity measurement by using the all-solid half-cell. Charge capacity density is obtained by dividing the measured charge capacity by the mass of each active material. Alternatively, the charge capacities of the positive active material layer 12 and the first negative active material layer 22a may be the initial charge capacities measured at the charging of the first cycle of charge/discharge processes.

[Negative electrode layer: Precipitation layer]

Referring to FIG. 5, the all-solid secondary battery 1 may further include by charging, for example, a second negative active material layer 23 arranged between the negative current collector 21 and the first negative active material layer 22. Although not shown in the drawing, the all-solid secondary battery 1 may further include a second negative active material layer 23 arranged between the solid electrolyte layer 30 and the first negative active material layer 22. The secondary negative active material layer 23 may be a metal layer including lithium or a lithium alloy. The metal layer includes lithium or a lithium alloy. Thus, since the second negative active material layer 23 is a metal layer including lithium, it acts as, for example, a lithium reservoir. A lithium alloy may include, for example, an Li-Al alloy, Li-Sn alloy, Li-In alloy, Li-Ag alloy, Li-Au alloy, Li-Zn alloy, Li-Ge alloy, Li-Si alloy, and the like, but is not limited thereto, and any used as a lithium alloy in the art may be used. The second negative active material layer 23 may consist of one of these alloys or lithium, or may consist of different kinds of alloys.

A thickness d23 of the second negative active material layer is not particularly limited but may be, for example, about 1 $\mu$m to about 1,000 $\mu$m, about 1 $\mu$m to about 500 $\mu$m, about 1 $\mu$m to about 200 $\mu$m, about 1 $\mu$m to about 150 $\mu$m about 1 $\mu$m to about 100 $\mu$m, or about 1 $\mu$m to about 50 $\mu$m. When the thickness d23 of the second negative active material layer is excessively decreased, it is difficult for the secondary negative active material 23 to function as a lithium reservoir. When the thickness d23 of the second negative active material layer is excessively increased, mass and volume of the all-solid secondary battery 1 are increased, and cycle characteristics may rather decline. The secondary negative active material layer 23 may be, for example, a metal foil having a thickness in this range.

In an all-solid secondary battery 1, the secondary negative active material layer 23 may be, for example, arranged between the negative current collector 21 and the first negative active material layer 22, before assembly of the all-solid secondary battery 1, or the secondary negative active material layer 23 may be precipitated by charging, between the negative current collector 21 and the first negative active material layer 22, after the assembly of the all-solid secondary battery.

When the second negative active material layer 23 is arranged between the negative current collector 21 and the first negative active material layer 22 before the assembly of the all-solid secondary battery 1, the secondary negative active material layer 23, a metal layer including lithium, acts as a lithium reservoir. As a result, cycle characteristic of the all-solid secondary battery 1 including the second negative active material layer 23 are further improved. For example, a lithium foil is arranged between the negative current collector 21 and the first negative active material layer 22 before the assembly of the all-solid secondary battery 1.

When the second negative active material layer 23 is arranged after the assembly of the all-solid secondary battery, energy density of the all-solid secondary battery increases because the secondary negative active material layer 23 is not included at the time of the assembly of the all-solid secondary battery 1. For example, when the all-solid secondary battery 1 is charged, the battery is charged beyond the charge capacity of the first negative active material layer 22. That is, the first negative active material layer 22 is overcharged. At an initial stage of the charging, lithium is occluded in the first negative active material layer 22. That is, the negative active material included in the first negative active material layer 22 forms an alloy or a compound with lithium ions that came from the positive electrode layer 10. When the first negative active material layer 22 is charged beyond its capacity, for example, at a back surface of the first negative active material layer 22, in other words, between the negative current collector 21 and the first negative active material layer 22, lithium is precipitated, and a metal layer corresponding to the secondary negative active material layer 23 is formed by the precipitated lithium. The second negative active material layer 23 is a metal layer mainly consisting of lithium (that is, metal lithium). These results are obtained when, for example, the negative active material included in the first negative active material layer 22 is composed of a substance that forms an alloy or a compound with lithium. During discharging, lithium in the first negative active material layer 22 and the second negative active material layer 23, that is, lithium in the metal layer, is ionized and moves in the direction of the positive electrode layer 10. Therefore, it is possible to use lithium as a negative active material in the all-solid secondary battery1. In addition, as the first negative active material layer 22 coats the second negative active material layer 23, the first negative active material layer functions as a protection layer of the secondary negative active material layer 23, that is, the metal layer, and at the same time, suppresses precipitation growth of lithium dendrites. Therefore, a short circuit occurrence and capacity deterioration of the all-solid secondary battery is suppressed, and as a result, the cycle characteristic of the all-solid secondary battery is improved. In addition, when the second negative active material layer 23 is arranged by charging after the assembly of the all-solid secondary battery 1, the negative current collector 21, the first negative active material layer 22, and the region therebetween are, for example, Li-free regions where lithium (Li) in not included, in an initial state or a state after a discharge.

An all-solid secondary battery according to an embodiment is applicable to a medium to large sized battery or an energy storage system (ESS).

Through the following examples and comparative examples, the present inventive concept will be explained in more detail. However, the examples are for exemplifying the present inventive concept, and the scope of the present inventive concept is not limited thereto.

Preparation Example 1

A positive active material having a coating film of $aLi_2O\text{-}ZrO_2$ was prepared according to the method disclosed in Korean Patent Publication No. 10-2016-0064942, and was prepared according to the following method.

An alcohol solution of $aLi_2O\text{-}ZrO_2$ (a=1) (coating liquid for coating $aLi_2O\text{-}ZrO_2$) was prepared by mixing and stirring a positive active material $LiNi_{0.9}Co_{0.05}Mn_{0.05}O_2$ (NCM), in a mixed solution of lithium methoxide, zirconium propoxide, ethanol, and ethyl acetoacetate for 30 minutes. Here, contents of lithium methoxide and zirconium propoxide were adjusted so that a content of $aLi_2O\text{-}ZrO_2$ (a=1) coated on a surface of the positive active material was 0.5 mol%.

Next, the coating liquid for coating $aLi_2O\text{-}ZrO_2$ was mixed with a fine powder of the above-described positive active material, and the mixed solution was heated to about 40 °C while stirring, to evaporate and dry solvents such as alcohol. In this regard, ultrasonic waves were transmitted to the mixed solution.

By performing the above process, a precursor of $aLi_2O\text{-}ZrO_2$ could be coated on particle surfaces of the fine powder of the positive active material.

In addition, the precursor of $aLi_2O\text{-}ZrO_2$ (a=1) coated on the particle surfaces of the positive active material was heat-treated at about 350 °C for 1 hour under an oxygen atmosphere. In this heat-treatment process, the precursor of $aLi_2O\text{-}ZrO_2$ (a=1) present on the positive active material was changed to $aLi_2O\text{-}ZrO_2$ (a=1). A content of $Li_2O\text{-}ZrO_2$ (LZO) was about 0.4 parts by weight, with respect to 100 parts by weight of NCM.

According to the preparation process described above, $LiNi_{0.9}Co_{0.05}Mn_{0.05}O_2$ (NCM) having an $aLi_2O\text{-}ZrO_2$ coating film was obtained. In $aLi_2O\text{-}ZrO_2$, a is 1.

Example 1

(Preparation of negative electrode layer)

An SUS foil having a thickness of 10 $\mu$m was prepared as a negative current collector. In addition, Ag nanoparticles with an average particle diameter of about 60 nm, carbon black, and styrene butadiene rubber (SBR) and sodium carboxymethyl cellulose (CMC), which are aqueous binders, were mixed in a weight ratio of 25: 75: 6: 3 to prepare a mixture. The SBR and CMC binder solutions were prepared by using water as a solvent.

The mixture was stirred with a Thinky mixer to adjust to an appropriate viscosity. Next, slurry was prepared by adding zirconia balls having an average diameter of 2 mm and stirring with the Thinky mixer. After coating the stirred slurry on the SUS foil, the foil was vacuum-dried at 100 °C to prepare a negative electrode layer having a thickness of 10 $\mu$m.

(Preparation of solid electrolyte layer)

Isobutylyl isobutylate (IBIB) was added as a binder solution to an argyrodite-type solid electrolyte $Li_6PS_5Cl$ and mixed. In this regard, the mixture was stirred with a Thinky mixer to adjust to an appropriate viscosity. The mixing weight ratio of the solid electrolyte to the binder was 98.5:1.5. After adjusting the viscosity of the mixture to 2,000 cP, zirconia balls having an average diameter of 2 mm were added and stirred again with the Thinky mixer to prepare slurry. The slurry was cast on a polyethylene terephthalate (PET) release film and dried at room temperature (25 °C) to prepare a solid electrolyte layer.

(Preparation of positive electrode layer)

As a positive active material, $LiNi_{0.9}Co_{0.05}Mn_{0.05}O_2$ (NCM) coated with $Li_2O-ZrO_2$ (LZO) obtained according to Preparation Example 1 was prepared. As a solid electrolyte, an argyrodite-type crystalline $Li_6PS_5Cl$ solid electrolyte (D50 = 1 $\mu$m or less, crystalline) was used. In addition, a polytetrafluoroethylene (PTFE) binder (DuPont's Teflon binder) was prepared as a binder, and carbon nanofibers (CNF), a conductive material, were prepared. A positive active material composition in which these materials were mixed with xylene in a weight ratio of positive active material: solid electrolyte: conductive material: binder = 85:15:3:1.5 was molded into a sheet form, and vacuum dried at 45 °C for 2 hours, to prepare a positive electrode layer having a thickness of about 150 $\mu$m.

(Preparation of all-solid secondary battery)

A laminate was prepared by placing a solid electrolyte layer between the positive electrode layer and the negative electrode layer. The prepared laminate was pressed with a warm isostatic press (WIP) at 80 °C with a pressure of 500 MPa for 60 minutes, to prepare an all-solid secondary battery. The solid electrolyte layer is sintered by this pressing treatment, and thus, battery characteristics are improved. A thickness of the sintered solid electrolyte layer was about 45 $\mu$m. A thickness of the pressed positive active material layer was about 120 $\mu$m, a thickness of the pressed negative active material layer was about 12 $\mu$m, a thickness of the pressed solid electrolyte was about 120 $\mu$m, and a thickness of the pressed mixed layer was about 2 $\mu$m.

Examples 2 to 5, and Comparative Examples 1 to 4

Experiments were carried out in the same manner as in Example 1, except that manufacturing conditions of the solid electrolyte layer and pressing conditions of the laminate were adjusted, in order that a thickness of the mixed layer arranged at an interface between the negative electrode layer and the solid electrolyte layer, a ratio of a negative electrode layer material to a solid electrolyte layer material in the mixed layer, and a thickness ratio of the mixed layer to the negative electrode are as shown in Table 1 below.

The mixing volume ratio of the negative electrode layer material to the solid electrolyte layer material in the mixed layer, in Table 1 below, was evaluated by measuring a ratio of a volume corresponding to the negative electrode layer material to a volume of the solid electrolyte layer in the mixed layer in a scanning electron microscopy (SEM) analysis of a scanning electron microscopy-energy dispersive X-ray spectroscopy (SEM-EDS) analysis.

[Table 1]

| Class | Thickness of mixed layer | Mixing volume ratio of negative electrode layer material to solid electrolyte layer material in mixed layer | Thickness ratio of mixed layer to negative electrode layer |
|---|---|---|---|
| Example 1 | 2 $\mu$m | 1:1 | 1:5 |
| Example 2 | 1 $\mu$m | 1:1 | 1:10 |
| Example 3 | 500 nm | 1:1 | 1:20 |
| Example 4 | 2 $\mu$m | 2:1 | 1:5 |
| Example 5 | 2 $\mu$m | 1:2 | 1:5 |

(continued)

| Class | Thickness of mixed layer | Mixing volume ratio of negative electrode layer material to solid electrolyte layer material in mixed layer | Thickness ratio of mixed layer to negative electrode layer |
|---|---|---|---|
| Comparative Example 1 | 5 μm | 1:2 | 1:2 |
| Comparative Example 2 | 100 nm | 1:1 | 1:100 |
| Comparative Example 3 | 2 μm | 3:1 | 1:5 |
| Comparative Example 4 | 2 μm | 1:3 | 1:5 |

Evaluation Example 1: Scanning electron microscope

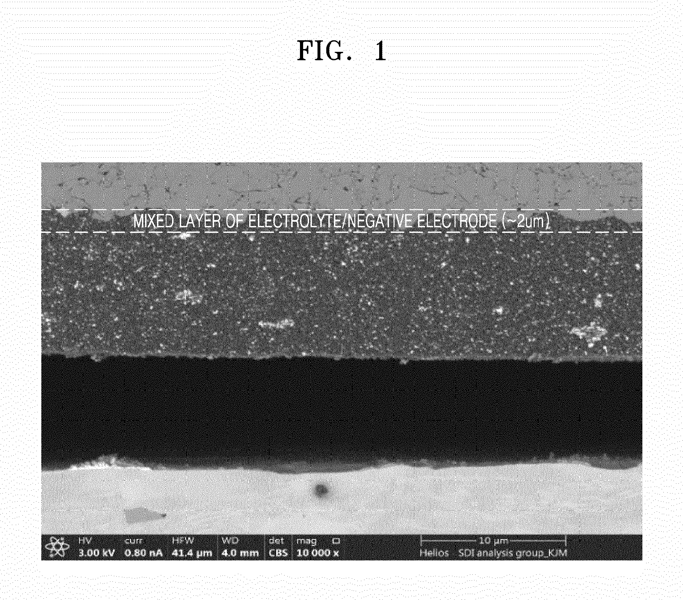

An SEM analysis was performed on a cross-sectional structure of the negative electrode layer/mixed layer/solid electrolyte layer laminate prepared according to Example 1. The SEM analysis image is as shown in FIG. 1.

Referring to FIG. 1, it was found that through the pressing process between the negative electrode layer and the solid electrolyte layer, stress was applied to the interface of the electrolyte layer and the negative electrode layer, and mixing was induced, and thus, the mixed layer existed at a thickness of about 2 μm or less. As shown in FIG. 1, the mixed layer had irregularities formed on the surface, and thus, a bonding area between the negative electrode layer and the solid electrolyte layer was increased, thereby improving bonding strength.

Evaluation Example 2: SEM-EDS analysis

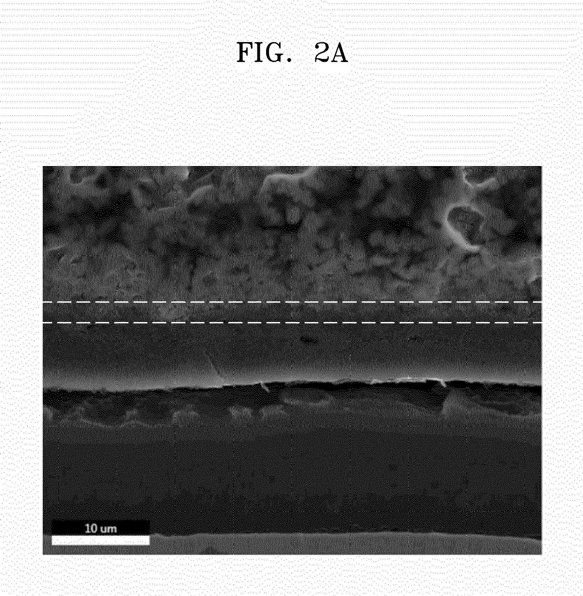

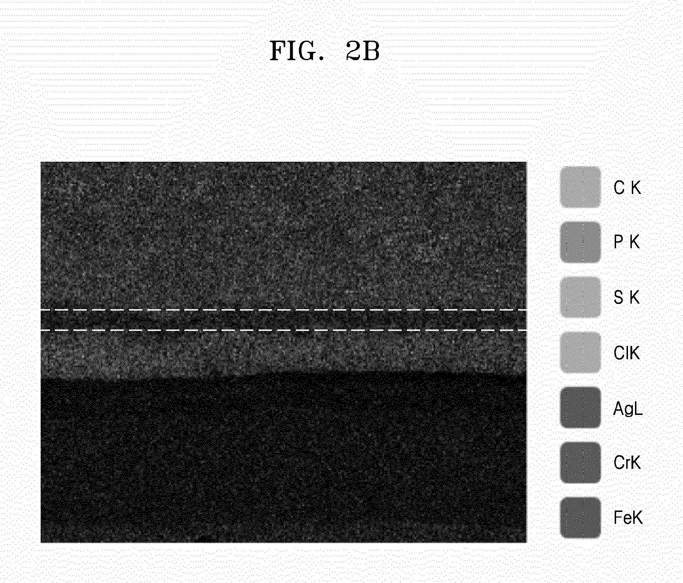

An SEM-EDS analysis was performed on a cross-sectional structure of the negative electrode layer/mixed layer/solid electrolyte layer laminate prepared according to Example 1. The SEM-EDS images are as shown in FIGS. 2A and 2B.

Referring to FIG. 2A, volumes of the negative electrode layer material and the solid electrolyte in the mixed layer were calculated to determine a mixing ratio thereof. And, referring to FIG. 2B, it was confirmed that two components (negative electrode: carbon and silver (Ag), electrolyte: sulfur (S), phosphorus (P), and chlorine (Cl)) overlap at the interface between the negative electrode layer and the solid electrolyte layer.

Evaluation Example 3: Initial discharge capacity

Battery lifespan characteristics were evaluated by performing charging/discharging processes on the all-solid secondary batteries prepared in Examples 1 to 5 and Comparative Examples 1 to 4. When evaluating battery lifespan, an initial discharge capacity was evaluated according to the following method, under a condition of charging at 0.1 C 4.25 V CC / CV (cutoff at 0.05 C), and then discharging at 0.1 C 2.5 V CC, at 45 °C.

The charge/discharge test was performed by putting the all-solid secondary battery in a thermostat at 45 °C.

The battery was charged for about 10 hours at a constant current of 0.1 C until the battery voltage reached 4.25 V, then was charged at a constant voltage of 4.25 V until the current reached 0.05 C, then, after a rest period of 10 minutes, was discharged for about 10 hours at a constant current of 1 C until the battery voltage reached 2.5 V. After going through this process, the initial discharge capacity at 1 C was evaluated and shown in Table 2 below.

Evaluation Example 4: Capacity retention rate

When evaluating battery lifespan, charging/discharging was performed under a condition of charging at 0.33 C 4.25 V CC / CV (cutoff at 0.1 C), and discharging at 0.33 C 2.5 V CC, at 45 °C. An initial capacity and a ratio of a remaining capacity after 100 cycles of a lifespan test to the initial capacity are shown in Table 2 below. A detailed description of the evaluation method is as follows.

Charge/discharge characteristics of the all-solid secondary batteries prepared in Examples 1 to 5 and Comparative Examples 1 to 4 were evaluated by the following charge/discharge test. The charge/discharge test was performed by putting the all-solid secondary battery in a thermostat at 45 °C.

The battery was charged for 10 hours at a constant current of 0.1 C until the battery voltage reached 4.25 V, and then discharged at a constant current of 0.05 C for 20 hours until the battery voltage reached 2.5 V (first cycle).

Subsequently, the battery was charged for 10 hours at a constant current of 0.1 C until the battery voltage reached 4.25 V, and then discharged at a constant current of 0.33 C for 3 hours until the battery voltage reached 2.5 V (second cycle).

Thereafter, the battery was charged for 10 hours at a constant current of 0.1 C until the battery voltage reached 4.25 V. Subsequently, the battery was discharged for 2 hours at a constant current of 0.5 C until the battery voltage reached 2.5 V (third cycle).

Afterwards, the battery was charged for 10 hours at a constant current of 0.1 C until the battery voltage reached 4.25 V. Subsequently, the battery was discharged for 1 hour at a constant current of 1 C until the battery voltage reached 2.5 V (forth cycle).

Afterwards, the battery was charged for 3 hours at a constant current of 0.33 C until the battery voltage reached 4.25 V. Subsequently, the battery was discharged for 3 hours at a constant current of 0.33 C until the battery voltage reached 2.5 V (fifth cycle).

The cycle was repeated a total of 100 times to respectively evaluate a capacity change and a capacity retention rate according to a number of cycles.

Capacity retention rate (lifespan) characteristics were evaluated according to Equation 1 below, and the evaluation results are shown in Table 2 below.

<Equation 1>

Capacity retention rate (%) = (discharge capacity after 100 cycles/first cycle discharge capacity) X 100

[Table 2]

|  | Initial discharge capacity (mAh/g) | Capacity retention rate (%) |
| --- | --- | --- |
| Example 1 | 171 | 96.5 |
| Example 2 | 166 | 97.1 |
| Example 3 | 169 | 96.4 |
| Example 4 | 168 | 96.1 |
| Example 5 | 168 | 96.5 |
| Comparative Example 1 | 167 | 91.2 |
| Comparative Example 2 | 161 | 94.9 |
| Comparative Example 3 | 164 | 92.6 |
| Comparative Example 4 | 167 | 93.5 |

Referring to Table 2, the all-solid secondary batteries of Examples 1 to 5 had improved initial discharge capacities and capacity retention rates compared to the all-solid secondary batteries of Comparative Examples 1 to 4. Exemplary embodiments have been described in detail with reference to the accompanying drawings, but the present inventive concept is not limited to these examples. It is obvious that a person with ordinary knowledge in the technical field to which this inventive concept belongs may derive various changes or modifications within the scope of the technical idea described in the claims, and these are, of course, within the technical scope of the inventive concept.

**Claims**

1. An all-solid secondary battery comprising: a positive electrode layer; a negative electrode layer; and a solid electrolyte layer arranged between the positive electrode layer and the negative electrode layer; and a mixed layer having a thickness of 2 $\mu$m or less is comprised between the negative electrode layer and the solid electrolyte layer, wherein the mixed layer comprises a negative electrode layer material and a solid electrolyte layer material, a thickness ratio of the negative electrode layer to the mixed layer is 2:1 to 50:1, and a mixing volume ratio of the negative electrode layer material to the solid electrolyte in the mixed layer is 2:1 to 1:1.

2. The all-solid secondary battery of claim 1, wherein a thickness of the negative electrode layer is about 1 $\mu$m to about 100 $\mu$m, and a thickness of the mixed layer is about 0.1 $\mu$m to about 2 $\mu$m.

3. The all-solid secondary battery of claim 1, wherein the negative electrode layer material comprises a first negative active material and a binder, and the solid electrolyte layer material comprises a solid electrolyte and a binder.

4. The all-solid secondary battery of claim 1, wherein the negative electrode layer comprises a negative current collector and a first negative active material layer, and the negative current collector, the negative active material layer, and a region therebetween are Li-free regions in which lithium (Li) is not included in an initial state or a post-discharge state of the all-solid secondary battery.

5. The all-solid secondary battery of claim 4, wherein the all-solid secondary battery comprises a lithium precipitation layer between the negative current collector and the first negative active material layer, during or after charging.

6. The all-solid secondary battery of claim 1, wherein the negative electrode layer comprises a negative current collector and a first negative active material layer, and a metal or metalloid thin film is comprised between the negative current collector and the first negative active material layer.

7. The all-solid secondary battery of claim 6, wherein the metal or metalloid thin film comprises gold (Au), silver (Ag), magnesium (Mg), zinc (Zn), silicon (Si), tin (Sn), platinum (Pt), palladium (Pd), aluminum (Al), bismuth (Bi), or a combination thereof, and a thickness of the metal or metalloid thin film is about 1 nm to about 800 nm.

8. The all-solid secondary battery of claim 1, wherein the negative electrode layer comprises a negative current collector and a first negative active material layer, and a metal layer is arranged between the negative current collector and the first negative active material layer, and the metal layer comprises lithium or a lithium alloy.

9. The all-solid secondary battery of claim 1, wherein the negative electrode layer comprises a negative current collector and a first negative active material layer, and a second negative active material layer is arranged at least one of: on an upper portion of the first negative active material layer; and between the negative current collector and the first negative active material layer, and the second negative active material layer comprises lithium or a lithium alloy.

10. The all-solid secondary battery of claim 1, wherein the negative electrode layer comprises a negative current collector and a first negative active material layer, and a carbon layer is comprised between the first negative active material layer and the solid electrolyte layer.

11. The all-solid secondary battery of claim 1, wherein the solid electrolyte layer comprises a sulfide-based solid electrolyte.

12. The all-solid secondary battery of claim 11, wherein the sulfide-based solid electrolyte is at least one selected from $Li_2S-P_2S_5$, $Li_2S-P_2S_5-LiX$ (in which X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, (in which m and n are positive numbers, and Z is one selected from Ge, Zn, and Ga), $Li_2S-GeS_2$, $Li_2S-SiS_2-Li_3PO_4$, $Li_2S-SiS_2-Li_pMO_q$ (in which p and q are positive numbers, and M is one selected from P, Si, Ge, B, Al, Ga, and In), $Li_{7-x}PS_{6-x}Cl_x$ ($0 \leq x \leq 2$), $Li_{7-x}PS_{6-x}Br_x$, ($0 \leq x \leq 2$), and $Li_{7-x}PS_{6-x}I_x$ ($0 \leq x \leq 2$).

13. The all-solid secondary battery of claim 11, wherein the sulfide-based solid electrolyte is an argyrodite-type compound comprising at least one selected from $Li_6PS_5Cl$, $Li_6PS_5Br$, and $Li_6PS_5I$.

14. A method of preparing an all-solid secondary battery according to any one of claims 1 to 13, comprising: providing a negative electrode layer comprising a negative current collector and a first negative active material layer; providing a positive electrode layer; preparing a laminate by providing a solid electrolyte layer between the negative electrode layer and the positive electrode layer; and pressing the laminate.

15. The method of claim 14, wherein the solid electrolyte layer is prepared by drying a composition containing a solid electrolyte, a binder, and a solvent, at about 25 °C to about 40 °C.

# FIG. 1

# FIG. 2A

# FIG. 2B

C K

P K

S K

ClK

AgL

CrK

FeK

# FIG. 3

# FIG. 4

# FIG. 5

## INTERNATIONAL SEARCH REPORT

| International application No. |
| --- |
| **PCT/KR2021/019656** |

### A. CLASSIFICATION OF SUBJECT MATTER

**H01M 10/0585**(2010.01)i; **H01M 4/134**(2010.01)i; **H01M 10/0562**(2010.01)i; **H01M 4/62**(2006.01)i; **H01M 10/052**(2010.01)i; **H01M 4/38**(2006.01)i; **H01M 4/04**(2006.01)i

According to International Patent Classification (IPC) or to both national classification and IPC

### B. FIELDS SEARCHED

Minimum documentation searched (classification system followed by classification symbols)

H01M 10/0585(2010.01); H01M 10/052(2010.01); H01M 10/0562(2010.01); H01M 10/36(2006.01); H01M 10/42(2006.01); H01M 4/02(2006.01); H01M 6/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 이차전지(all solid secondary battery), 혼합(mix), 두께(thickness), 석출 (precipitation), 압력(press)

### C. DOCUMENTS CONSIDERED TO BE RELEVANT

| Category* | Citation of document, with indication, where appropriate, of the relevant passages | Relevant to claim No. |
| --- | --- | --- |
| X | JP 2003-077529 A (SANYO ELECTRIC CO., LTD.) 14 March 2003 (2003-03-14) See claim 1; paragraphs [0024], [0025], [0038], [0045] and [0065]; and figures 2A and 2B. | 1,2,11,12,14 |
| Y | | 3-10,13,15 |
| Y | KR 10-2019-0100078 A (SAMSUNG ELECTRONICS CO., LTD.) 28 August 2019 (2019-08-28) See claims 1, 20 and 21; and paragraphs [0139], [0141], [0147], [0170] and [0174]. | 3-5,8,9,13,15 |
| Y | KR 10-2015-0095875 A (FURUKAWA ELECTRIC CO., LTD.) 21 August 2015 (2015-08-21) See claims 1, 3 and 7; and paragraph [0018]. | 6,7,10 |
| A | JP 2008-226637 A (MATSUSHITA ELECTRIC IND CO., LTD.) 25 September 2008 (2008-09-25) See entire document. | 1-15 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**29 March 2022** | Date of mailing of the international search report<br><br>**29 March 2022** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/019656**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0076506 A (RESEARCH INSTITUTE OF INDUSTRIAL SCIENCE & TECHNOLOGY) 29 June 2020 (2020-06-29)<br>See entire document. | 1-15 |

Form PCT/ISA/210 (second sheet) (July 2019)

**INTERNATIONAL SEARCH REPORT**
Information on patent family members

| International application No. |
| --- |
| **PCT/KR2021/019656** |

| Patent document cited in search report | | | Publication date (day/month/year) | Patent family member(s) | | | Publication date (day/month/year) |
| --- | --- | --- | --- | --- | --- | --- | --- |
| JP | 2003-077529 | A | 14 March 2003 | None | | | |
| KR | 10-2019-0100078 | A | 28 August 2019 | JP | 2019-145299 | A | 29 August 2019 |
| | | | | US | 2019-0260065 | A1 | 22 August 2019 |
| KR | 10-2015-0095875 | A | 21 August 2015 | CN | 105027346 | A | 04 November 2015 |
| | | | | CN | 105027346 | B | 21 November 2017 |
| | | | | JP | 10155327 | B2 | 28 June 2017 |
| | | | | KR | 10-1856302 | B1 | 09 May 2018 |
| | | | | TW | 201503455 | A | 16 January 2015 |
| | | | | TW | I556490 | B | 01 November 2016 |
| | | | | US | 2016-0197351 | A1 | 07 July 2016 |
| | | | | WO | 2014-156638 | A1 | 02 October 2014 |
| JP | 2008-226637 | A | 25 September 2008 | None | | | |
| KR | 10-2020-0076506 | A | 29 June 2020 | CN | 113196544 | A | 30 July 2021 |
| | | | | DE | 112019006365 | T5 | 02 September 2021 |
| | | | | KR | 10-2204140 | B1 | 18 January 2021 |
| | | | | WO | 2020-130442 | A1 | 25 June 2020 |

Form PCT/ISA/210 (patent family annex) (July 2019)

**EP 4 297 143 A1**

REFERENCES CITED IN THE DESCRIPTION

**Patent documents cited in the description**

- KR 1020160064942